# EUROPÄISCHE PATENTSCHRIFT

(11) **EP 0 835 158 B1**
(45) Veröffentlichungstag und Bekanntmachung des Hinweises auf die Patenterteilung: **03.03.1999**
(21) Anmeldenummer: 96915998.7
(22) Anmeldetag: 12.06.1996
(51) Int. Cl.: B01D 29/11, B01D 35/147, F01M 11/03

(54) **SCHMIERÖLFILTER FÜR INSBESONDERE VERBRENNUNGSMOTOREN**
LUBRICANT OIL FILTER INTENDED FOR USE IN PARTICULAR IN INTERNAL COMBUSTION ENGINES
FILTRE A HUILE DESTINE NOTAMMENT AUX MOTEURS A COMBUSTION INTERNE

(30) Priorität: 17.06.1995 DE 19522023
(43) Veröffentlichungstag der Anmeldung: 15.04.1998
(73) Patentinhaber: KNECHT FILTERWERKE GMBH, 70376 Stuttgart (DE)
(72) Erfinder: BRUSS, Elke, D-71679 Asperg (DE); JENSEN, Hans, D-73237 Kirchheim/Teck (DE); MÖHLE, Rolf, D-74626 Bretzfeld (DE)
(74) Vertreter: Patentanwalts-Partnerschaft Rotermund + Pfusch
(86) Internationale Anmeldenummer: DE9601027
(87) Internationale Veröffentlichungsnummer: WO9700112

(56) Entgegenhaltungen:
- EP-A- 0 547 291
- EP-A- 0 612 549
- EP-A- 0 653 234
- DE-A- 4 303 694

## Beschreibung

Die Erfindung betrifft ein Schmierölfilter für insbesondere Verbrennungsmotoren nach den Merkmalen des Oberbegriffs des Patentanspruchs 1.

Ein derartiges Ölfilter ist aus EP-A-06 12 549 bekannt.

Aus DE-A-41 31 353 ist ein Ölfilter mit einem Haupt- und einem Nebenstromfiltereinsatz bekannt, bei dem die beiden Einsätze auf einem drehbar in dem Schraubdeckel dieses Filters gelagerten Träger lösbar aufgesetzt sind. Bei diesem Filter wirkt der Träger nicht mit einem Zusatzabflußkanal in dem Sinne zusammen, daß dieser Kanal bei geschlossenem Deckel geschlossen und bei geöffnetem Deckel geöffnet ist. Des Weiteren ist der dort aus insbesondere gefaltetem Filterbahnmaterial bestehende eine der beiden Filtereinsätze radial innen unzureichend stabil über seine gesamte Länge gelagert bzw. gestützt.

Hiervon ausgehend beschäftigt sich die Erfindung mit dem Problem, den Aufbau eines gattungsmäßig aus der zuerst genannten Schrift EP-A-06 12 549 abgeleiteten Filters zu vereinfachen, dessen Funktion zu verbessern und zusätzlich für eine gute Abstützung des Filtereinsatzes radial innen zu sorgen. Durch eine gute radial innen erfolgende Abstützung des Filtereinsatzes soll dessen festigkeitsbedingte Haltbarkeit verbessert werden.

Eine grundsätzliche Lösung dieses Problems wird durch eine Ausführung des gattungsgemäßen Schmierölfilters nach den kennzeichnenden Merkmalen des Patentanspruchs 1 erreicht.

Die Erfindung beruht auf dem Gedanken, den Ringfiltereinsatz allein auf dem Träger zu lagern und dabei gleichzeitig den von dem Schraubdeckel zu dem Boden des Filtergehäusetopfes durchlaufenden Träger im Bereich des Filtereinsatzes zwischen dessen Stirnseiten derart durchlässig rohrförmig auszubilden, daß dieses Rohr als Stützzarge für die radiale Innenabstützung des Ringfiltereinsatzes benutzt werden kann.

Zweckmäßige Ausgestaltungen der Erfindung sind Gegenstand der Unteransprüche und werden anhand verschiedener Ausführungsbeispiele noch näher erläutert werden.

Ausführungsbeispiele der Erfindung sind in der Zeichnung dargestellt.

Es zeigen alle Figuren eine im wesentlichen schematische Darstellung eines Filtergehäuses im Längsschnitt. Der Unterschied der einzelnen Ausführungen besteht im wesentlichen lediglich in verschiedenen unterschiedlichen Teilungen des Trägers in Längsrichtung.

Folgende Teilungen sind in den einzelnen Figuren dargestellt.

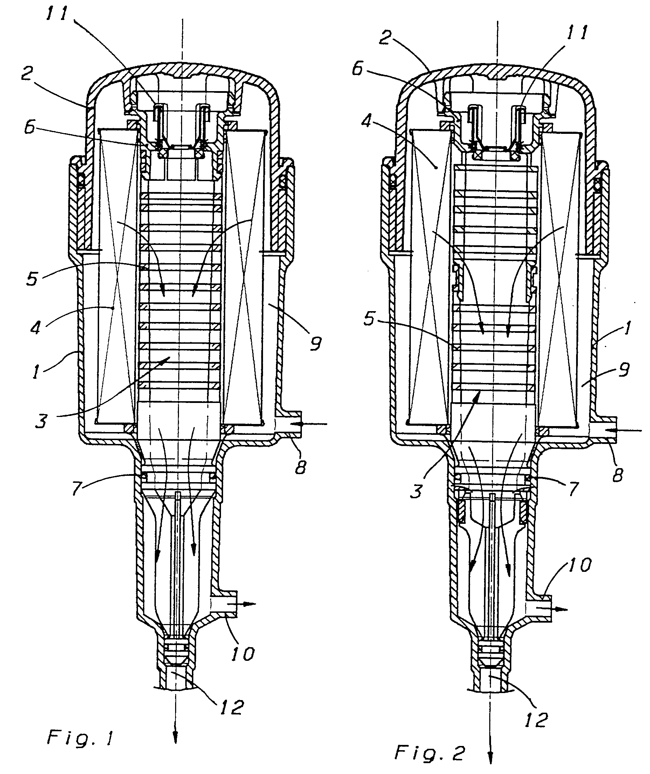

- Fig. 1: der Träger besteht aus einem nahezu über die gesamte Länge sich erstreckenden Unterteil und einer aufgeschnapSpten Kappe,
- Fig. 2: der Träger ist in drei miteinander verrastete Teile aufgeteilt,

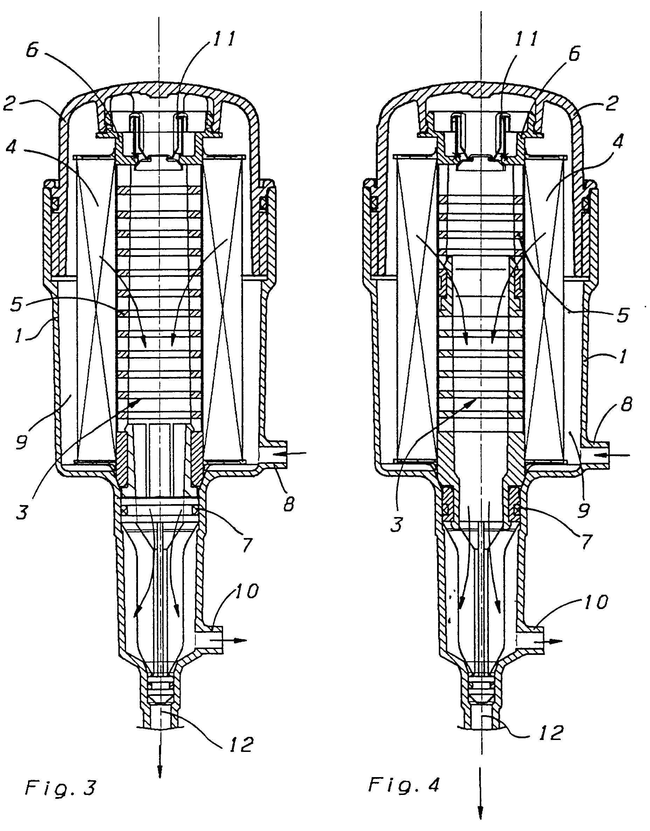

- Fig. 3: der Träger besteht aus einem Oberteil mit einer Kappe und einem mit diesem verrasteten Unterteil,
- Fig. 4: der Träger besteht aus drei miteinander verrasteten Einzelteilen,

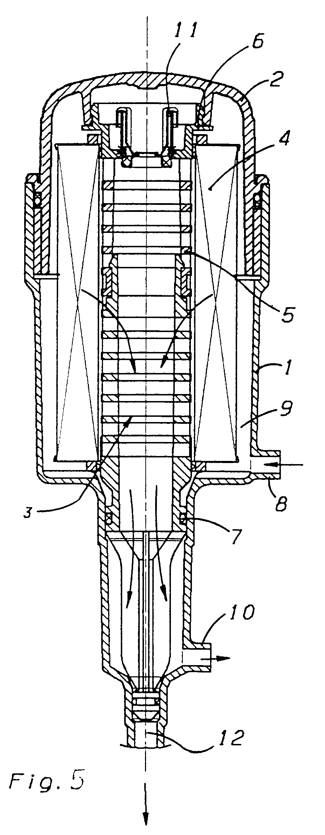

- Fig. 5: der Träger ist zweigeteilt mit einer Teilung etwas oberhalb der Mitte des Filtereinsatzes,
- Fig. 6: der Träger setzt sich aus einem Ober- und einem Unterteil, die miteinander in Höhe der unteren Stirnseite des Filtereinsatzes verrastet sind, zusammen, wobei das obere Ende des Trägers ein ringförmiges Filtersieb umgibt.

Das Filtergehäuse besteht aus einem oben offenen Filtergehäusetopf 1, der mit einem Schraubdeckel 2 verschließbar ist. In dem Bodenbereich ist der Filtergehäusetopf 1 flaschenhalsartig eingezogen.

Ein Träger 3 ist über einen Rastverschluß drehbar in dem Schraubdeckel 2 gelagert und nimmt einen ringförmigen Filtereinsatz 4 auf. Der Träger 3 ist in demjenigen Bereich, in dem er von dem Filtereinsatz 4 zwischen dessen Stirnseiten umschlossen wird, als radial durchlässiges Stützrohr 5, an dem der Ringfilter radial innen anliegt, ausgebildet. Oben an dem zu dem Schraubdeckel 2 gewandten Ende ist das Stützrohr 5 durch eine Kappe 6 axial dicht verschlossen. Im Bereich der unteren Stirnseite des Ringfiltereinsatzes 4 ist das Stützrohr 5 radial undurchlässig ausgeführt. Der Ringfiltereinsatz 4 liegt radial dicht an seiner oberen Stirnseite an der Kappe 6 und an seiner unteren Stirnseite in dem radial undurchlässigen Bereich des Stützrohres 5 an.

In dem flaschenhalsartig eingezogenen Bodenbereich des Filtergehäusetopfes 1 ist ein über die untere Stirnseite des Filtereinsatzes 4 hinausragender radial undurchlässiger Bereich des Stützrohres 5 über eine Ringdichtung 7 gegenüber dem Filtergehäusetopf 1 gedichtet.

Das zu reinigende Schmieröl tritt durch einen Zulaufkanal 8 in einen den Filtereinsatz 4 radial umgebenden Außenraum 9 ein. Von diesem Außenraum 9 aus durchströmt das Öl den Ringfiltereinsatz in dessen zentralen Raum innerhalb des Stützrohres 5 hinein und verläßt als gereinigtes Öl den Filtergehäusetopf 1 durch einen Abflußkanal 10. Der Außenraum 9 ist damit der Rohraum des Filters und der innerhalb des Filtereinsatzes 4 liegende Bereich, der sich nach unten in den flaschenhalsförmigen Ansatz des Filtergehäusetopfes 1 erstreckt, der Reinraum. Durch die Ringdichtung 7 sind der Reinraum und der Rohraum des Filters voneinander getrennt, wobei der radial undurchlässige Bereich des Stützrohres 5 ein Teil der Trennwand zwischen Rein- und Rohraum ist. Das Stützrohr 5 ist in seinem durchlässigen innerhalb des Filtereinsatzes 4 liegenden Bereich derart ausgebildet, daß es als Innenstützzarge für den Filtereinsatz dienen kann.

In der Kappe 6 ist ein Überströmventil 11 eingebaut.

In dem flaschenhalsartigen Bodenbereich des Filtergehäusetopfes 1 ist ein Zusatzabflußkanal 12 vorgesehen, der von dem freien Ende des Trägers 3 bei geschlossenem Schraubdeckel 2 verschlossen ist.

Durch ein Öffnen des Schraubdeckels 2, der an dem Träger 3 drehbar angelenkt ist, wird der Zusatzabflußkanal 12 automatisch geöffnet, indem das Verschlußstück des Trägers 3 aus der Öffnung dieses Zusatzabflußkanales 12 herausgleitet.

Durch das Herausziehen des Trägers 3 aus dem Filtergehäusetopf 1 wird zusätzlich auch noch der durch den Dichtring 7 gegebene Verschluß zwischen Rein- und Rohraum geöffnet, so daß gereinigtes und ungereinigtes Öl gemeinsam durch den Zusatzabflußkanal 12 abfließen kann.

Um den Träger einfach aus beispielsweise Kunststoff herstellen zu können, ist er über seine Länge ein- bis mehrfach geteilt. Die einzelnen geteilten Abschnitte sind miteinander über Federzungen und Gegenlager verrastet. Die Teilungen und Verrastungsarten sind in den einzelnen Figuren dargestellt und dort so gut erkennbar, daß sie ohne weitere Erläuterungen verständlich sind.

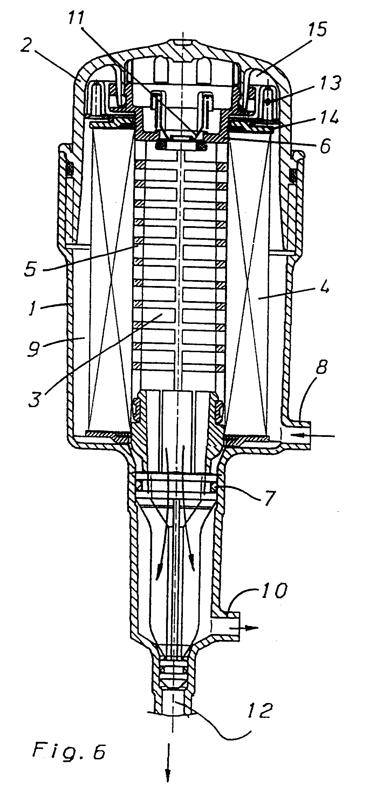

Bei der Ausführung nach Fig. 6 ist an dem oberen Ende des Stützrohres 5 zwischen diesem und der Umfangswand des Schraubdeckels 2 ein ringförmiges Siebfilter 13 vorgesehen. Dieses dient als Grobfilter für gegebenenfalls durch das Überströmventil 11 strömendes Schmieröl. Das Siebfilter 13 besteht insgesamt aus elastischem Kunststoff mit durch Stege verstärkten Filterflächen und besitzt die Form eines Ringes mit U-förmigem Querschnitt. Mit seinen parallel zur Filterachse ausgerichteten U-Schenkeln ist das Siebfilter 13 zwischen der oberen Endscheibe 14 des Filtereinsatzes 4 und der Umfangswand des Schraubdeckels 2 dicht spangenartig eingespannt. Dabei kann das Siebfilter 13 mit einem radial innen liegenden U-Schenkel auf einem Ringbund der Endscheibe 14 axial hinterschnittartig aufgeschnappt sein. Dadurch ist das Siebfilter 13 als Bestandteil des Filtereinsatzes 4 handhab- und montierbar. Innerhalb des Schraubdeckels 2 kann das Siebfilter 13 auch noch axial über radiale Rippen 15 am Boden des Schraubdeckels 2 abgestützt sein.

## Patentansprüche

1. Schmierölfilter, für insbesondere Verbrennungsmotoren, mit den Merkmalen,
a) ein Filtergehäusetopf (1) ist stehend angeordnet und mit einem Schraubdeckel (2) von oben verschließbar,
b) der Filtergehäusetopf (1) besitzt einen Zulaufkanal (8) für zu reinigendes und einen Abflußkanal (10) für gereinigtes ei sowie einen Zusatzabflußkanal (12) im zentralen Bodenbereich des Filtergehäusetopfes (1), wobei durch den Zusatzabflußkanal (12) gereinigtes und ungereinigtes Öl gemeinsam abfließen kann, wenn der Schraubdeckel (2) geöffnet ist,
c) der Zusatzabflußkanal (12) ist bei geschlossenem Schraubdeckel (2) verschlossen und bei geöffnetem Schraubdeckel geöffnet,
d) ein radial von außen nach innen durchströmter axial gedichteter Ringfiltereinsatz (4) aus sternförmig gefaltetem Filterbahnmaterial wird im Bereich seiner oberen Stirnseite radial dicht von einem axial durch sein Zentrum verlaufenden Träger (3) gehalten, von dem der Ringfiltereinsatz (4) lösbar ist,
e) der Träger (3) ist drehbar an dem Schraubdeckel (2) gelagert und ragt derart bis zum Boden des Filtergehäusetopfes (1), daß er den Zusatzabflußkanal (12) bei geschlossenem Deckel (2) verschließt,
f) zur Bildung eines Roh- und Reinraumes innerhalb des Filtergehäusetopfes (1) ist das Zentrum des Filtereinsatzes (4) mit dem Abflußkanal (10) für gereinigtes Öl verbunden und gegenüber dem radial außerhalb des Filtereinsatzes (4) liegenden, den Zulaufkanal (8) für zu reinigendes Öl enthaltenden, Außenraum (9) getrennt, wobei der Filtereinsatz (4) an seinem unteren Ende lösbar dicht mit einer Roh- und Reinraum trennenden Wand verbindbar ist,
**gekennzeichnet durch die Merkmale**
g) der Träger (3) ist in dem von dem Filtereinsatz (4) umschlossenen zwischen dessen Stirnseiten liegenden Bereich ausschließlich als an dem Filtereinsatz (4) anliegendes radial durchlässiges Stützrohr (5) ausgebildet,
h) der Filtereinsatz (4) liegt an seiner unteren Stirnseite radial dicht an einem dort radial undurchlässigen Bereich des Stützrohres (5) an,
i) der der unteren Stirnseite des Filtereinsatzes (4) zugeordnete radial undurchlässige Bereich des Stützrohres (5) setzt sich nach unten in Richtung des unteren freien Endes des Trägers (3) axial begrenzt fort und formt bei geschlossenem Schraubdeckel (2) eine trennende Wand zwischen Rein- und Rohraum des Filtergehäusetopfes (1),
k) der radial undurchlässige Bereich des Stützrohres (5) liegt bei geschlossenem Schraubdeckel (2) lösbar dicht an dem Filtertopfgehäuse (1) an,
l) der Abflußkanal (10) liegt unterhalb des radial undurchlässigen axial begrenzten Bereiches des Stützrohres (5) in einem radial durchlässigen Bereich des Trägers (3), sodaß das gereinigte Öl im radial durchlässigen Bereich des Trägers (3) unterhalb des radial undurchlässigen Bereiches des Trägers durch den Träger in den Abflußkanal fließen kann.

2. Ölfilter nach Anspruch 1,
**dadurch gekennzeichnet,**
daß der Träger (3) über seine axiale Länge gesehen aus miteinander verrasteten Einzelelementen zusammengesetzt ist.

3. Schmierölfilter nach Anspruch 1 oder 2,
**dadurch gekennzeichnet,**
daß oben in einer Kappe (6) des Stützrohres (5) des Trägers (3) ein Überströmventil (11) eingebaut ist.

4. Schmierölfilter nach Anspruch 3,
**dadurch gekennzeichnet,**
daß dem Überströmventil (11) in dem den Träger (3) lagernden Schraubdeckel (2) ein ringförmiges Filtersieb (13) mit U-förmigem Querschnitt vorgeschaltet ist, das mit parallel zur Filterachse ausgerichtet verlaufenden U-Schenkeln radial zwischen der Umfangswand des Schraubdeckels (2) und der dort angrenzenden Endscheibe (14) des Filtereinsatzes (4) dicht eingespannt ist.

5. Schmierölfilter nach Anspruch 4,
**dadurch gekennzeichnet,**
daß das Filtersieb (13) mit der Endscheibe (14) des Filtereinsatzes (4) axial fixiert verrastbar ist.

6. Schmierölfilter nach Anspruch 5,
**dadurch gekennzeichnet,**
daß die Verrastung an einer umlaufenden Ringschulter der Endscheibe (14) gegeben ist.

7. Schmierölfilter nach einem der vorhergehenden Ansprüche,
**dadurch gekennzeichnet,**
daß in dem unten in dem Filtergehäusetopf (1) zwischen dem radial undurchlässigen Bereich des Stützrohres (5) und dem freien den Zusatzabflußkanal (12) Verschließenden Ende ein Bereich des Trägers (3) liegt, in dem dieser einen kreuzförmigen Querschnitt aufweist.

## Claims

1. Lubricating-oil filter, for internal combustion engines in particular, with the following features:
a) a filter-housing cup (1) is arranged vertical and can be closed from above by means of a screw cover (2),
b) the filter-housing cup (1) has an inlet port (8) for oil which is to be cleaned and an outlet port (10) for cleaned oil and has an additional outlet port (12) in the central bottom region of the filter-housing cup (1), it being possible for cleaned and uncleaned oil to flow out together through the additional outlet port (12) if the screw cover (2) is open,
c) with the screw cover (2) closed, the additional outlet port (12) is closed and, with the screw cover open, the additional outlet port (12) is open,
d) in the region of its upper end, an axially sealed annular filter insert (4) made of filter web material folded in a star shape, through which the oil flow passes radially from the outside inwards, is held in a radially leak-tight manner by a support (3) which extends axially through its centre and from which the annualr filter insert (4) can be detached,
e) the support (3) is rotatably mounted on the screw cover (2) and projects as far as the bottom of the filter-housing cup (1) such that it closes the additional outlet port (12) when the cover (2) is closed,
f) to form a dirty and clean space within the filter-housing cup (1), the centre of the filter insert (4) is connected to the outlet port (10) for cleaned oil and is separated from the outer space (9) which lies radially to the outside of the filter insert (4) and contains the inlet port (8) for oil to be cleaned, it being possible for the filter insert (4) to be connected detachably and in a leak-tight manner at its lower end to a wall separating the dirty space and the clean space,
characterized by the following features:
g) the support (3) is designed exclusively as a radially permeable supporting tube (5), which rests against the filter insert (4), in the region surrounded by the filter insert (4) and situated between the ends of the latter,
h) at its lower end, the filter insert (4) rests radially in a leak-tight manner against a region of the supporting tube (5) which is radially impermeable at that point,
i) the radially impermeable region of the supporting tube (5), which is that associated with the lower end of the filter insert (4), continues downwards with an axial boundary in the direction of the lower free end of the support (3) and, with the screw cover (2) closed, forms a dividing wall between the clean space and the dirty space of the filter-housing cup (1),
k) with the screw cover (2) closed, the radially impermeable region of the supporting tube (5) rests detachably in a leak-tight manner against the filter-housing cup (1),
l) below the radially impermeable, axially bounded region of the supporting tube (5), the outlet port (10) lies in a radially permeable region of the support (3), so that the cleaned oil in the radially permeable region of the support (3) below the radially impermeable region of the support can flow through the support into the outlet port.

2. Oil filter according to Claim 1, characterized in that the support (3) is made up, as seen over its axial length, of individual elements latched together.

3. Lubricating-oil filter according to Claim 1 or 2, characterized in that an overflow valve (11) is built in at the top in a cap (6) of the supporting tube (5) of the support (3).

4. Lubricating-oil filter according to Claim 3, characterized in that the overflow valve (11) has arranged ahead of it, in the screw cover (2) supporting the support (3), an annular filter screen (13) with a U-shaped cross-section which is clamped leak-tightly radially between the peripheral wall of the screw cover (2) and the end disc (14), adjoining it at that point of the filter insert (4), by means of U legs extending in parallel alignment to the filter axis.

5. Lubricating-oil filter according to Claim 4, characterized in that the filter screen (13) can be latched in an axially fixed manner to the end disc (14) of the filter insert (4).

6. Lubricating-oil filter according to Claim 5 characterized in that the latching is provided at an encircling annular shoulder on the end disc (14).

7. Lubricating-oil filter according to one of the preceding claims, characterized in that a region of the support (3) in which the latter has a cross-shaped cross-section is situated in the [lacuna] at the bottom in the filter-housing cup (1) between the radially impermeable region of the supporting tube (5) and the free end, which closes the additional outlet port (12).

## Revendications

1. Filtre à huile lubrifiante, en particulier pour moteurs à combustion interne, ayant les caractéristiques suivantes :
a) un pot de corps de filtre (1) est placé verticalement et fermé en haut par un couvercle fileté (2),
b) le pot de corps de filtre (1) a un conduit d'arrivée (8) pour l'huile à épurer, un conduit de départ (10) pour l'huile épurée et un conduit supplémentaire d'écoulement (12) dans la zone de fond du pot (1) par lequel l'huile épurée et l'huile non épurée peuvent s'écouler ensemble lorsque le couvercle fileté (2) est ouvert,
c) la conduit supplémentaire d'écoulement (12) est fermé lorsque le couvercle fileté (2) est fermé et ouvert lorsque celui-ci est ouvert,
d) un élément filtrant annulaire (4) obturé axialement, traversé radialement de l'extérieur vers l'intérieur et fait de bande filtrante pliée en étoile est, dans la zone de sa face frontale supérieure, tenu radialement de manière étanche par un support (3) qui le traverse en son centre et duquel il peut être séparé, e) le support (3) est monté avec liberté de rotation sur le
couvercle fileté (2) et va jusqu'au fond du pot de corps de filtre (1) de façon à fermer le conduit supplémentaire d'évacuation (12) lorsque le couvercle (2) est fermé,
f) pour la formation d'un espace brut et d'un espace pur à l'intérieur du pot de corps de filtre (1), le centre de l'élément filtrant (4) communique avec le conduit de départ (10) pour l'huile épurée et est séparé de l'espace extérieur (9) situé radialement à l'extérieur de l'élément filtrant (4) et contenant le conduit d'arrivée (8) pour l'huile à épurer, l'élément filtrant (4) pouvant, à son extrémité inférieure, être joint de manière étanche et détachable à une paroi qui sépare les espaces brut et pur,
caractérisé par les caractéristiques suivantes :
g) le support (3) est, dans sa zone entourée par l'élément filtrant (4) et située entre les faces frontales de celui-ci, formé exclusivement d'un tube d'appui imperméable radialement (5) qui s'appuie sur l'élément filtrant (4),
h) l'élément filtrant (4), sur son côté frontal inférieur, s'appuie de manière étanche radialement sur une partie imperméable radialement à cet endroit du tube d'appui (5),
i) la partie imperméable radialement du tube d'appui (5) associée à la face frontale inférieure de l'élément filtrant (4) se poursuit axialement vers le bas de manière limitée en direction de l'extrémité libre inférieure du support (3) et forme lorsque le couvercle fileté (2) est fermé une paroi séparatrice entre l'espace pur et l'espace brut du pot de corps de filtre (1),
k) lorsque le couvercle fileté (2) est fermé, la partie imperméable radialement du tube d'appui (5) s'appuie de manière étanche et séparable sur le pot de corps de filtre (1),
l) le conduit de départ (10) est situé au-dessous de la zone imperméable radialement et limitée axialement du tube d'appui (5) dans une zone perméable radialement du support (3), de sorte que l'huile épurée peut, dans la zone perméable radialement du support (3) au-dessous de la zone imperméable radialement de celui-ci, traverser celui-ci pour aller dans le conduit de départ.

2. Filtre à huile lubrifiante selon la revendication 1, caractérisé par le fait que le support (3), vu sur sa longueur axiale, est composé d'éléments encliquetés les uns aux autres.

3. Filtre à huile lubrifiante selon l'une des revendications 1 et 2, caractérisé par le fait qu'une soupape de décharge (11) est montée en haut dans un capuchon (6) du tube d'appui (5) du support (3).

4. Filtre à huile lubrifiante selon la revendication 3, caractérisé par le fait qu'avant la soupape de décharge (11) est monté dans le couvercle fileté (2) dans lequel est monté le support (3) un tamis filtrant annulaire (13) à section en U qui est serré radialement de manière étanche par des ailes de U parallèles à l'axe du filtre entre la paroi périphérique du couvercle fileté (2) et le flasque d'extrémité voisin de cet endroit (14) de l'élément filtrant (4).

5. Filtre à huile lubrifiante selon la revendication 4, caractérisé par le fait que le tamis filtrant (13) peut être fixé axialement par encliquetage au flasque d'extrémité (14) de l'élément filtrant (4).

6. Filtre à huile lubrifiante selon la revendication 5, caractérisé par le fait que l'encliquetage a lieu sur un épaulement annulaire circonférentiel du flasque d'extrémité (14).

7. Filtre à huile lubrifiante selon l'une des revendications précédentes, caractérisé par le fait que dans le en bas dans le pot de corps de filtre (1) entre la zone imperméable radialement du tube d'appui (5) et l'extrémité libre qui obture le conduit supplémentaire d'écoulement (12) se trouve une partie du support (3) dans laquelle celui-ci a une section cruciforme.
